# EUROPEAN PATENT APPLICATION

(11) **EP 4 580 128 A1**
(43) Date of publication of application: **02.07.2025**
(21) Application number: 24214201.6
(22) Date of filing: 20.11.2024
(51) Int. Cl.: H04L 12/28, G06F 3/16, G06F 40/30, G10L 15/18, H04L 67/51

(54) **SMART HOME FUNCTIONALITY AWARENESS FOR USER TASKS**

(30) Priority: 28.12.2023 US 202318398455
(71) Applicant: INTEL Corporation, Santa Clara, CA 95054 (US)
(72) Inventor: IBARRA VON BORSTEL, Alejandro, Santa Clara, 95054 (US); LOPEZ MEYER, Paulo, Santa Clara, 95054 (US); CORDOURIER MARURI, Hector Alfonso, Santa Clara, 95054 (US); ZAMORA ESQUIVEL, Julio, Santa Clara, 95054 (US); MACIAS GARCIA, Edgar, Santa Clara, 95054 (US); CAMPOS MACIAS, Leobardo, Santa Clara, 95054 (US)
(74) Representative: Rummler, Felix

(57) **Abstract**

Smart home functionality awareness may improve the ability for a smart home system to identify existing and absent smart home skills or smart home devices that may be used to perform a specific task requested by a user. This smart home functionality awareness improves the ability of a smart home system to identify an existing capability of the smart home system that addresses requested electronic device command. This smart home functionality awareness improves the ability of a smart home system to identify a recommended capability, where the recommended capability provides improved functionality over the existing capability for addressing the requested electronic device command. This recommended capability may be identified based on determining that existing capabilities are sufficient to accomplish a task with low performance, and further identify what additional resources may be needed to improve the ability of the smart home system to execute the requested electronic device command.

## Description

### BACKGROUND

Smart home technology (e.g., smart devices) typically involves a network of interconnected electronic devices that can communicate with each other and be remotely controlled via a central system or through mobile applications. Smart home technology is continuously growing due to users demanding innovative solutions for various smart home devices, such as smart thermostats, smart locks, connected lighting systems, home security cameras, and voice assistance systems (VAS) (e.g., voice-activated assistants). Existing voice assistance systems include Amazon Alexa, Google Home, and Apple Siri. These voice assistance systems typically track smart devices that are connected to its network, and correlate the smart devices to a specific set of programmed commands. Example smart home control commands may include "Alexa: turn-on the front lights," or "Hey Google: raise the temperature by 1 degree."

Despite their widespread adoption, existing smart home technologies often face challenges in terms of interoperability, data security, and user-friendly interfaces. There is a need for innovations in smart home technology to address these challenges, improve the integration of smart home devices into everyday life, and enhance the overall user experience.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings.
FIG. 1 is a block diagram illustrating user interactions for smart home functionality awareness, according to an embodiment.
FIG. 2 is a block diagram illustrating system components for smart home functionality awareness, according to an embodiment.
FIG. 3 is a block diagram illustrating system components for smart home functionality awareness, according to an embodiment.
FIG. 4 is a block diagram illustrating a message broker interactions 400 for smart home functionality awareness, according to an embodiment.
FIG. 5 is a block diagram illustrating communication flows for smart home functionality awareness, according to an embodiment.
FIG. 6 is a flowchart illustrating a registration process for smart home functionality awareness, according to an embodiment.
FIG. 7 is a flowchart illustrating a system inquiry flow for smart home functionality awareness, according to an embodiment.
FIG. 8 is a block diagram illustrating a smart home system for smart home functionality awareness, according to an embodiment.
FIG. 9 is a flow diagram illustrating a method for functionality awareness for a smart home system, according to an embodiment.
FIGs. 10A and 10B provide an overview of example components within a computing device in an edge computing system, according to embodiments.

### DETAILED DESCRIPTION

The technical solutions for smart home functionality awareness described herein provide improved smart home system functionality and an improved user experience. This smart home functionality awareness improves the ability for a smart home system to identify existing and absent smart home skills or smart home devices that may be used to perform a specific task requested by a user. In an example, a user may initiate a smart home request with the phrase "{Voice Assistant}, who is at front door?", and that task may use a smart camera device with a face recognition skill (e.g., face recognition software). In another example, a user may initiate a smart home request with the phrase "Hey {Voice Assistant}, who is talking in the kids' room?", and that task may use a microphone device with voice-based speaker identification skill (e.g., speaker recognition software). This smart home functionality awareness improves the ability of a smart home system to identify an existing capability of the smart home system that addresses requested electronic device commands.

This smart home functionality awareness improves the ability of a smart home system to recommend a capability, where the recommended capability provides improved functionality over the existing capability for addressing the requested electronic device command. This recommended capability may be identified based on determining that existing capabilities are sufficient to accomplish a task with low performance, and further identify what additional resources may be needed to improve the ability of the smart home system to execute the requested electronic device command.

The methodology for the smart home functionality awareness may define functional blocks and data structures used in enabling self-awareness. The methodology may also describe a communication protocol to handle heterogeneous devices and skills (e.g., electronically controllable devices and skills that provide more than one action or service) by using custom Functional Semantic Identifier (FSID) data structures. These FSIDs may include identification data (e.g., device identification string) that may be used as device descriptors or skill descriptors, and may be used for semantical correlation between the user commands and the device or skill.

The technical solutions provide various improvements, including improving the functionality of smart home systems, reducing computational load on processing resources, reducing networking bandwidth requirements, and improving user experience. The self-awareness, allocation of existing devices or skills, and recommendation of new devices or skills provide a significant reduction in the complexity associated with semantic search of smart home hardware or software devices. This provides advantages over large language models (LLMs) that use semantic search engines to combine fine-tunning (e.g., online learning) and Retrieve Augmented Generation (RAG) techniques, and avoids the use of chains of LLM pipelines to provide semantic feature extraction. By using FSIDs for embedding the semantics, these technical solutions provide a more efficient method to index existing and recommended hardware and software functionality.

The technical solutions for smart home functionality awareness described herein may be implemented on-premises (e.g., in a smart home controller) or in an edge computing environment (e.g., at an edge computing device, fog computing environment) to reduce latency, bandwidth requirements, and computation load. By using FSIDs to store and retrieve semantic representation of the user request and the required hardware or software capabilities, the searches for existing or recommended smart home functionality could be handled in an edge computing environment. The smart home functionality awareness may further use a load balancer with indexed tasks tables to provide improved distribution of smart home functionality awareness task indexing and distribution across multiple computing resources, such as cloud computing servers, network links, memory (e.g., hard drives).

While the technical solutions are described herein with respect to smart home devices, these technical solutions may be applied to other electronically remotely controlled devices, such as office building devices (e.g., office security systems), transportation devices (e.g., remote vehicle start), personal devices (e.g., ring to find lost cell phone), autonomous vehicles (e.g., unmanned aerial vehicle delivery), or other electronically remotely controlled devices.

In the following description, for purposes of explanation, numerous specific details are set forth to provide a thorough understanding of some example embodiments. It will be evident, however, to one skilled in the art that the present disclosure may be practiced without these specific details.

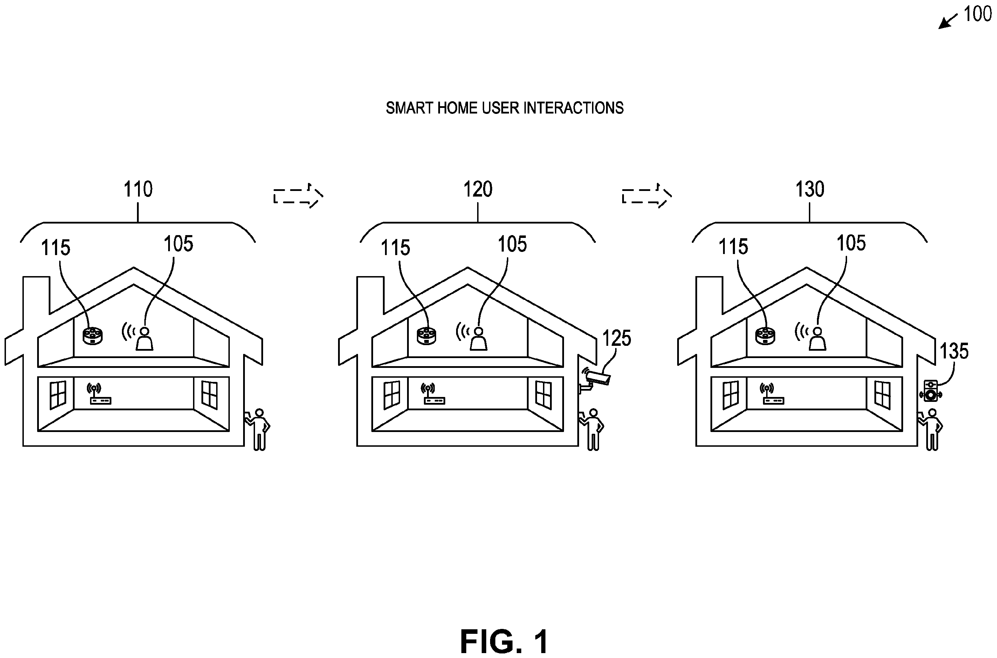

FIG. 1 is a block diagram illustrating user interactions 100 for smart home functionality awareness, according to an embodiment. In each of the user interactions 100, the user 105 issues a command to a VAS 115. The VAS 115 may include or be connected to a smart home system with functionality awareness.

In the first interaction 110, the user 105 issues a command to the VAS that requests identification of someone at the door, such as "Hey VAS, tell me who is knocking?" The VAS 115 may identify that the smart home system does not currently include an active camera at the front door that provides facial recognition capabilities, and that the VAS 115 is currently incapable of servicing the request. The inability of the smart home system to provide the requested functionality may be caused by the smart home system not including a camera, a previously connected camera being offline (e.g., low battery, network connection dropped), or the camera not being usable for the requested facial recognition functionality. In response to the user request, the VAS 115 may respond to the user 105 to indicate the status of the smart home system, such as "Sorry, I'm missing a camera with a facial recognition skill" or "Sorry, the camera appears to be offline at the moment." This first interaction 110 demonstrates the ability of the VAS 115 to identify the currently insufficient functionality of the smart home system to fulfill the request of the user 105, to convey that status to the user 105, and to recommend hardware or software solutions to fulfill the request.

In the second interaction 120, the smart home system may include a security camera 125. In response to the user 105 issuing a command to the VAS that requests identification of someone at the door, the VAS 115 may use images from the security camera 125 and facial recognition software to identify the person at the door, such as "Okay, I think the person at the door is Hector." The VAS 115 may also identify that a different device may improve accuracy in identifying a person at the front door. In an example, the VAS 115 may recommend adding a smart doorbell camera device to improve identifying accuracy, such as "By the way, I could improve my accuracy in identifying who is at the door if you add a smart doorbell device." This second interaction 120 demonstrates the ability of the VAS 115 to fulfill the request of the user 105 and recommend improvements to smart home functionality.

In the third interaction 130, the smart home system may include a smart doorbell device 135. In response to the user 105 issuing a command to the VAS that requests identification of someone at the door, the VAS 115 may use an indication from the smart doorbell device 135 (e.g., indication directly from smart doorbell device 135, facial recognition software applied to images captured by smart doorbell device 135) to identify the person at the door and identify an improved identification confidence level, such as "Okay, I am sure that the person at the door is Paulo." This third interaction 130 demonstrates the ability of the VAS 115 to fulfill the request of the user 105 and confirm that the request can be performed adequately, thereby providing an improved smart home experience for the user 105.

As shown in the user interactions 100, the use of a smart home system with functionality awareness improves the ability for end users to become aware of and take advantage of technical features provided by connected smart home devices. The functionality awareness (e.g., ability for the smart home system to discover, catalog, and track functionality of smart home devices in its environment) also improves the ability for end users to be aware of additional smart home functionality that is compatible with their smart home system.

The smart home systems described herein improves the ability of the smart home system to identify and recommend smart home functionalities, such as by abstracting semantics from user commands into data structures, functional blocks, and a communication protocol. These smart home systems also improve the ability for end users to interact more naturally with the smart home system, such as by providing improved semantic interpretation of requested tasks and smart home device functionalities. These improved smart home capabilities improve the ability of the smart home system to fulfill increasingly complex tasks for a single smart home devices (e.g., a computationally intensive task, a sequence of tasks) or for a heterogenous set of connected smart home devices.

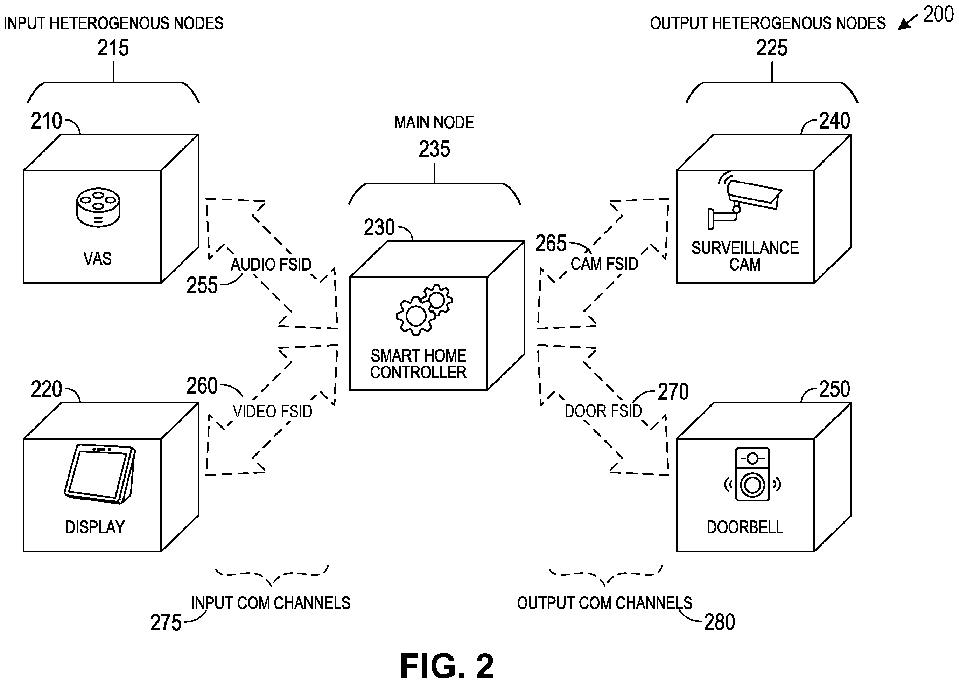

FIG. 2 is a block diagram illustrating system components 200 for smart home functionality awareness, according to an embodiment. The system components 200 shown in FIG. 2 depicts the interaction between a main node 235 containing a smart home controller (SHC) 230 and various input/output (I/O) nodes, such as input heterogeneous nodes 215, output heterogeneous nodes 225.

The input heterogenous nodes 215 includes various sensors and devices that collect data to address user requests, such as VAS 210 and smart display 220. The input heterogenous nodes 215 may include various other input devices, such as voice activated microphones, user activated cameras, and other input devices. The output heterogenous nodes 225 includes various devices that receive a control signal that is output from the SHC 230 and execute a user request based on that output control signal, such as surveillance camera 240 or smart doorbell 250 capturing an image or identifying a person. The output heterogenous nodes 225 may include various other devices configured to execute the user request based on the SHC 230 output control signal, such as smart lock devices, smart garage door openers, and other devices that execute user requests. While input heterogenous nodes 215 and output heterogenous nodes 225 are described as heterogeneous to indicate different types of devices may be used within each group, multiple types of a device may be used within a group, such as using multiple VAS 210 devices or using multiple surveillance camera 240 devices.

The SHC 230 in the main node 235 may connect to and communicate with devices within the input heterogenous nodes 215 via input communication channels 275. Similarly, the SHC 230 may connect to and communicate with devices within the output heterogenous nodes 225 via output communication channels 280. The SHC 230 may use FSIDs to identify and communicate with specific devices. In an example, the SHC 230 uses an audio FSID 255 to communicate with the VAS 210, a video FSID 260 to communicate with the smart display 220, a camera FSID 265 to communicate with the surveillance camera 240, and a door FSID 270 to communicate with the smart doorbell 250.

When a smart device is registered with the SHC 230, the SHC 230 may store information about the smart device functionality and the device-specific communication channel in a system status table (SST). The SHC 230 may use the SST to identify and execute smart home functionality based on natural language (NL) queries provided by a user. In response to a query such as "What are you?", the SHC 230 may use the SST to decode sequences of FSIDs registered in its SST into descriptions of available smart home functionality. In response to a query such as "What can you do?", the SHC 230 may use the SST to decode FSIDs describing various functionalities into a description of available tasks or other functionalities. In response to a query such as "Can you do this?", the SHC 230 may use the SST to identify a specific FSID or compatible FSID. In response to a query such as "How could you do it better?", the SHC 230 may use the SST to identify relational pairs of target FSIDs and compatible FSIDs. In response to a query such as "What do you need to accomplish the task?", the SHC 230 may use the SST to compare target FSIDs or compatible FSIDs against installed or available devices within the input heterogenous nodes 215 or within the output heterogenous nodes 225.

The SHC 230 uses these FSIDs to provide improved smart home device registration, communication, and semantic user request processing with various devices within the input heterogenous nodes 215 or within the output heterogenous nodes 225. The use of FSIDs improves the ability of the SHC 230 to interpret user requests, understand smart home functionality limitations, and inform users of gaps and potential upgrades.

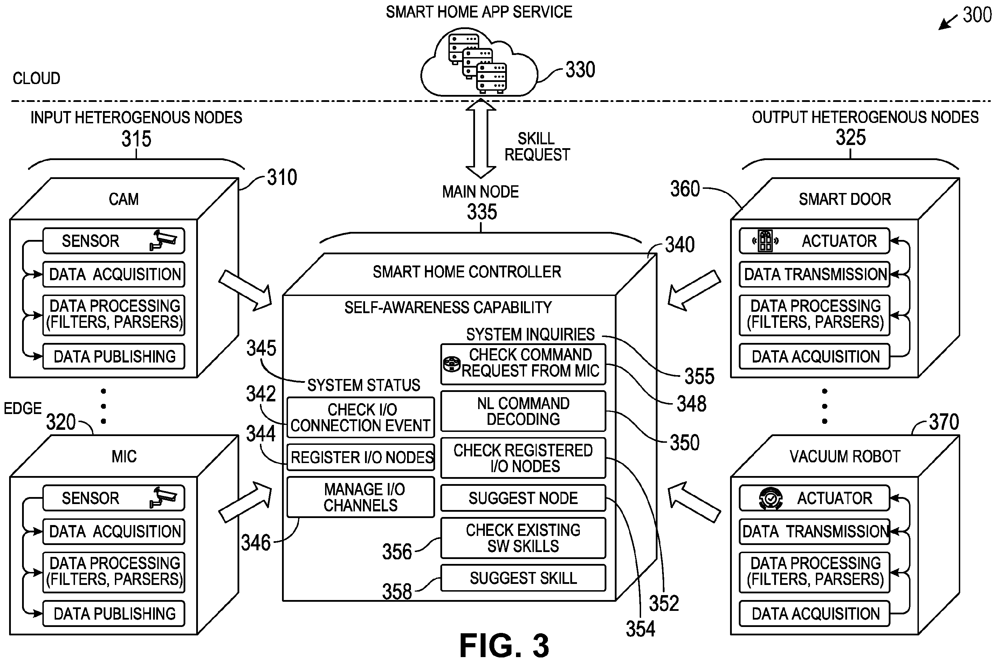

FIG. 3 is a block diagram illustrating system components 300 for smart home functionality awareness, according to an embodiment. The system components 300 shown in FIG. 3 depict the interaction between input heterogeneous nodes 315, output heterogeneous nodes 325, and a main node 335 containing an SHC 340 with self-awareness capability.

The input heterogeneous nodes 315 may include cameras 310, microphones 320, and other input devices. Each of the input heterogeneous nodes 315 may include sensors (e.g., image capture device, audio transducer), data acquisition functionality to collect sensor data, data processing functionality (e.g., data filters, data parsers), and data publishing functionality. The data communicated between the input heterogeneous nodes 315 and the SHC 340 may be encoded (e.g., tagged, encrypted) with FSIDs, such as when publishing processed sensor data to the SHC 340.

The output heterogeneous nodes 325 may include smart door 360 (e.g., smart lock), vacuum robots 370, and other output devices. Each of the output heterogeneous nodes 325 may include data acquisition functionality to receive commands from the SHC 340, data processing (e.g., data filtering, data parsing) to process data received from the SHC 340, data transmission functionality to communicate processed data, and actuator functionality (e.g., door lock servo, vacuum motion control) to receive communicated processed data and initiate an action (e.g., lock a door, vacuum a room). The data communicated between the output heterogeneous nodes 325 and the SHC 340 may be encoded with FSIDs, such as when receiving instructions to fulfill a user request from the SHC 340.

The main node 335 includes an SHC 340 with self-awareness capability. This capability may be distributed in two processing pipelines: the systems status management pipeline 345 and the system inquiries management pipeline 355. Within the systems status management pipeline 345, the SHC 340 handles I/O node connection events 342. The node connection events 342 may include the SHC 340 in the main node 335 listening for node connection requests to the system. When a connection request is received from an input or output heterogenous node, the node connection events 342 may initiate a device registration procedure 344.

The device registration procedure 344 may include receiving and processing I/O node connection request information and storing this information into a system status table (SST). The processed and stored information may include a Universal Unique Identifier (UUID) associated with the device, a target FSID, and a compatible FSID. The target FSID identifies a primary or ideal FSID that encodes the full functionality needed to accomplish a particular user command or task. The target FSID represents the semantics of the desired action. In the example shown in FIG. 1, a user may request identification of a person at a door, and the target FSID may include a doorbell camera with facial recognition. In contrast, the compatible FSID identifies a secondary or alternate device identified by the smart home system that can still provide the required functionality, but may do so in a lower fidelity manner. The compatible FSID provides compatible semantics that could achieve the goal through substitution, even if the result is less precise or suboptimal. While target FSIDs represent optimal semantics to satisfy user requests, compatible FSIDs provide alternate approximations to address user requests when ideal devices are unavailable. In the example shown in FIG. 1, in response to the user requesting identification of a person at a door, the compatible FSID may include a security camera with lower resolution. This capturing of both the target FSID and compatible FSID within the SST provides improved smart home functionality self-awareness, and provides improved identification and recommendation of potential functionality substitutions.

Within the systems status management pipeline 345, the SHC 340 also manages I/O node connection channels 346. The SHC 340 may determine whether the SHC 340 has an existing communication channel defined for a given I/O node FSID. If no such communication channel exists, the SHC 340 creates a communication channel between itself and the I/O node. The SHC 340 may create a data label associated with that communication channel, where the label may include a messaging topic that includes an indication of the I/O node FSID.

The system inquiries management pipeline 355 manages receiving an input command request 348, such as by listening at a voice-activated microphone for user commands. The user commands may be entered through an input node embedded in the main node 335 (e.g., text commands, audio commands). The input received at the main node 335 may be received through an external I/O node, such as from an external I/O node with a specific FSID indicating that the external I/O node will be used as a command input node.

The system inquiries management pipeline 355 provides NL command decoding 350. When a user sends an NL command to the main node 335, the system inquiries management pipeline 355 decodes this NL command sequence into an FSID pair that includes an input FSID and an output FSID, which may include target and compatible FSIDs.

The system inquiries management pipeline 355 provides a registration check for I/O nodes 352. Using the previously decoded pair of FSIDs, the main node 335 determines whether there is any I/O node connected and listening to the corresponding FSID communication channel. This enables the system inquiries management pipeline 355 to determine whether there are registered I/O nodes that can execute the request of the user.

The system inquiries management pipeline 355 provides a software (SW) skill registration check 356. Using the previously decoded pair of FSIDs, the main node 335 may determine whether there is any SW installed and listening to the corresponding FSID communication channels. If not, then the SHC 340 may suggest a specific SW skill 358 to be installed. The main node 335 may send the request for the specific SW skill 358 to a smart home application service 330, which may provide the specific SW skill 358 back to the SHC 340.

The main node 335 may use FSIDs for communication with the input heterogeneous nodes 315 and the output heterogeneous nodes 325, and may use FSIDs for identifying target and compatible FSIDs. These FSIDs provide the SHC 340 with a non-random identifier for I/O nodes, and provide improved storage and retrieval of FSIDs by grouping the FSIDs into a specific functional namespace. In an example, FSIDs may be created off-line, such as in advance of the device registration procedure 344. Creation of FSIDs may include generating a set of domain namespaces based on a UUID version 5 standard. Creation of an FSID may begin with an input seed, which may be generated based on hardware data and an input string. The input strings may represent various domains associated with I/O node functionalities that a smart home system may encounter, such as vision, speech, NLP, display, speaker, servo, or other I/O node functionalities. A software program (e.g., Python snippet) may be used for creating the domain namespaces, such as shown in the following example code:

```
       # Generate a seed ID with UUID Vl, to avoid randomness, to generate functionality
       namespaces.
       # UUID used like a seed IO for generating non-random Namespaces
      idSeed = uuid.uuidl()
      print(idSeed)
       # Example output: d859abf6-06e2-llee-88bl-888827flde3c
       # Generate Functionality namespaces
      visionDomain = "vision"
      visionNamespaceID = uuid.uuidS (idSeed, visionDomain)
      print(visionNamespaceIO)
       # Example output: 516756a8-8bel-525c-ba45-bebaddb4ca5a
       speechDomain = "speech"
       speechNamespaceID = uuid.uuidS (idSeed, speechDomain)
      print(speechNamespaceID)
       # Example output: dbc86376-d3f9-5a85-9fbf-c4f2a470cee2
       displayDomain = "Display"
       displayNamespaceID = uuid.uuidS(idSeed, displayDomain)
      print(displayNamespaceID)
       # Example output: d8deall5-42b7-5768-b86d-44fce83b76fb
       speakerDomain = "speaker"
       speakerNamespaceID = uuid.uuidS(idSeed, speakerDomain)
      print(speakerNamespaceID)
       # Example output: d52357bl-ec22-5led-888a-c6c7C883033d
       doorDomain = "Door"
       doorNamespaceID = uuid.uuidS (idSeed, doorDomain)
      print(doorNamespaceID)
       # Example output: 35eb85e7-94d0-5243-a383-C16b3157196d
```

Following creation of the domain namespace IDs, these namespace IDs may be used as seeds for generating the FSIDs with input strings that represent more specific tasks. In an example, to create FSIDs for a speech domain, a set of semantic strings may be defined using the format "<source>; <action>; <target>". A semantic string may be used to represent the meaning of a user command entered to the system. The semantic string and a domain namespace ID may be used to generate an FSID. The generated FSIDs may be used to group input nodes capable of capturing related input signals, and may be used to deliver features for target output nodes. The generated FSIDs may be arranged in a domain space dictionary that includes pair of descriptive strings and a semantic triplet representation to provide metadata for generating FSIDs. Each semantic triplet representation may include a source device, an action, and a target of the action. An example semantic triplet may include "microphone, identify, speaker," which may represent using a microphone device for identification of the person who is currently speaking. An example domain space dictionary is shown below:

```
       namespaceOict = {speechNamespaceIO: [
       ("who is talking in the room", "mic-device;identify;speaking-user"),
       ("identify who is speaking in boys room", "mic-device;identify;speaking-user"),
       ("who speaks with the kids", "mic -device;identify;speaking-user")],
      visionNamespaceIO: [
       ("who rings the bell", cam-device;identify:faces),
       ("who is at the guest room", "cam-device;identify;faces"),
       ("who enters the backyard", "cam-device;identify;faces")],
       displayNamespaceIO: [
       ("show me guest room", "display-device;display;video"),
       ("show me the backyard", "display-device;display;video"),
       ("show me front door", "display-device;display;video")],
       doorNamespaceIO: [
       ("open front door", "lock-device;set;open"),
       ("open backyard", "lock-device; set; open"),
       ("close guest's room", "lock-device;set;close")]}
```

The device registration procedure 344 may include generating a table recording various FSIDs. In response to an I/O node requesting a connection with the system inquiries management pipeline 355, the connection request should include I/O node-specific data such as UUID, target FSID, and compatible FSID. The use of compatible FSIDs may be used by the SHC 340 to identify I/O nodes that may be used for more than one task type. The main node 335 takes this I/O node-specific data and updates SST, such as shown in Table 1 below:

**TABLE 1: Example of a System Status Table (SST) Implementation**

| **Node** | **UUID** | **Status** | **Target FSID** | **Compatible FSID** |
|---|---|---|---|---|
| Mic-device | 82ddd68b-9163-4187-9b27-20a8fd60a71d | Installed-Not enabled | a0e8e04c-9b5a-43be-8b7d-c98760492b68 | 3222e04c-1011-43be-8b7d-c98760494478 |
| Cam-device | 9fb1a1f3-3b71-4324-b39a-745cbb015fff | Installed-enabled | cd0a2ee7-418b-47e3-89c4-65d9169efd23 | aeb9c5c1-94f1-4d02-bfd9-4602db2d3c54 |
| 3D-cam-device | c133fe57-17c7-4b09-8b3c-97c189d0ab8d | Not installed | aeb9c5c1-94f1-4d02-bfd9-4602db2d3c54 | NA |
| Stereo-mic-device | 87c8bad7-0595-4053-8297-dede395f5d5b | Not installed | 3222e04c-1011-43be-8b7d-c98760494478 | 8963e04c-105a-43be-8b7d-c98760495246 |
| Array-mic-device | ecc07551-d64c-4c07-ab95-940566ed31f1 | Installed | 8963e04c-105a-43be-8b7d-c98760495246 | NA |
| Speaker-recog-skill | 76659212-4331-8593-0124-f25347162a1c | Installed | a0e8e04c-9b5a-43be-8b7d-c98760492b68 | 3222e04c-1011-43be-8b7d-c98760494478 |
| Face-recog-skill | A0f45632-220a-e112-2bcd-cc364a0189f0 | Not installed | cd0a2ee7-418b-47e3-89c4-65d9169efd23 | aeb9c5c1-94f1-4d02-bfd9-4602db2d3c54 |

In the example shown in Table 1, the Stereo-mic-device FSID is compatible with an Array-mic-device FSID. If the user requests a task that targets the Stereo-mic FSID, but the SST indicates that the Stereo-mic FSID is not installed or enabled, then the Array-mic-device could be used as an input device for accomplishing the task requested by the user.

Information in the SST may be combined with information in the domain space dictionary to generate a training dataset for a NL-FSID Transformer model. Once trained, the NL-FSID Transformer model may be used to convert a natural language request into an input FSID and output FSID pair. The training dataset may be represented in an FSID table that maps a NL request to an associated namespace, semantic triplet, input FSID, and output FSID. An example of this FSID table is shown in Table 2 below:

**TABLE 2: Metadata Training Dataset for NL-FSID Transformer Model**

| **NL Req** | **Namespace** | **Semantic triplet (source, action, target)** | **Input FSID** | **Output FSID** |
|---|---|---|---|---|
| "who is talking in guest room and show me guest room" | [dbc86376-d3f9-5a85-9fbf-c4f2a470cee2], [d0dea115-42b7-5768-b06d-44fce83b76fb] | [mic-device; identify; speaking-user], [display-device; display; video] | db49d97b-5225-522e-bcd0-bc4c1b324abc | 561d9a73-0a52-5842-8607-20a6641a8473 |
| "who rings the bell and show me the front door" | [516756a0-8be1-525c-ba45-bebaddb4ca5a], [d0dea115-42b7-5768-b06d-44fce83b76fb] | [cam-device; identify; faces], [display-device; display; video] | eda70bd3-d593-5e1d-b5a5-61de5blea4d0 | 561d9a73-0a52-5842-8607-20a6641a8473 |
| "who enters the backyard and close front door" | [516756a0-8be1-525c-ba45-bebaddb4ca5a], [35eb85e7-94d0-5243-a383-c16b3157196d] | [cam-device; identify; faces], [lock; set; close] | eda70bd3-d593-5e1d-b5a5-61de5blea4d0 | de211fec-a579-546e-ba4c-63ed9cbfbb34 |

The FSID table may also be used during registration of new software functionality (e.g., new software skill). When a user requests a new software functionality, the SHC 340 may request the functionality from the smart home application service 330. Whenever a new software functionality is installed, the SST may be updated to include a UUID associated with the newly installed software functionality with corresponding target FSID and compatible FSID, such as shown in Table 1. The NL-FSID Transformer model may be used to use a natural language request to identify a software functionality in the SST. If no compatible software functionality is identified, the SHC 340 may suggest installation of a software functionality that can address the natural language request.

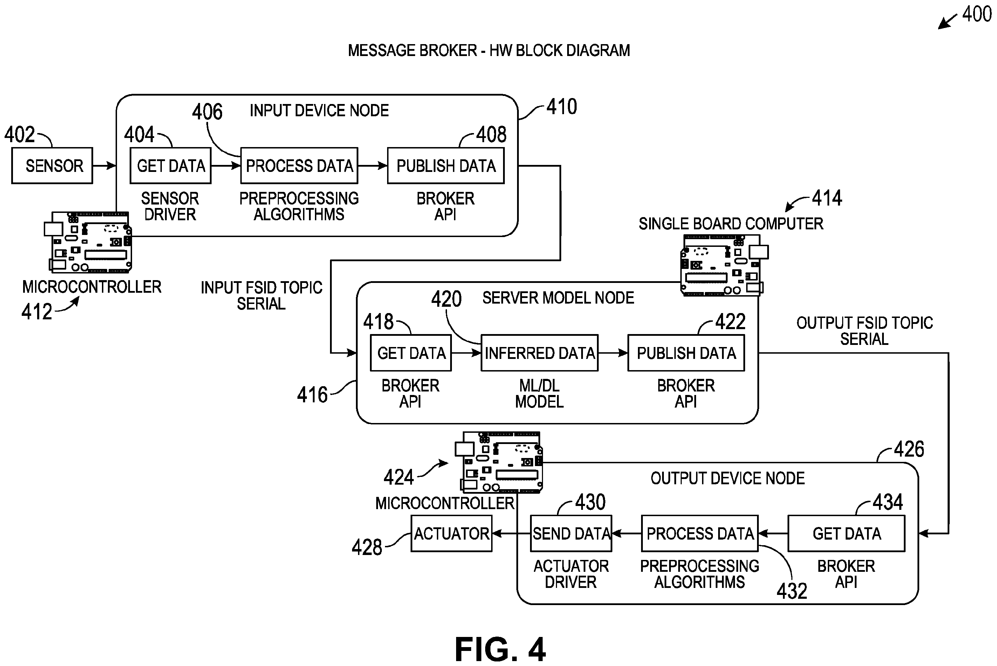

FIG. 4 is a block diagram illustrating a message broker interactions 400 for smart home functionality awareness, according to an embodiment. The message broker interactions 400 shown in FIG. 4 depict message broker interactions 400 between the nodes, including an input device node 410, a server model node 416, and an output device node 426. FIG. 4 also depicts functional blocks inside each of the I/O nodes involved with the SHC communication protocol.

The input device node 410 may receive input data (e.g., a user request) from a sensor 402, such as receiving a user request from a voice activated microphone. The input device node 410 includes a sensor driver 404 to retrieve the sensor data, preprocessing algorithms 406 to process the data, and an input broker application programming interface (API) 408 to publish the data to server model node 416. The input device node 410 may encode the sensor data with the sensor node FSID topic. In an example, the input device node 410 is implemented on a microcontroller board 412 (e.g., Intel Galileo microcontroller).

The server model node 416 may use a server receiver broker API 418 to receive the processed sensor data, use a machine learning (ML) or deep learning (DL) model 420 to infer data from the processed sensor data and use a server publisher broker API 422 to publish the inferred data to the output device node 426. This ML/DL inference may be used to infer a user command or sensor data analysis, such as analyzing input camera image data, inferring a person identification based on the image data, and sending the identification to a door controller to unlock a door. The server model node 416 may encode the inferred data with the sensor node FSID. In an example, the server model node 416 is implemented on a single board computer 414 (e.g., Intel Rock PI X board).

The output device node 426 may use an output node receiver broker API 434 to receive the inferred data, use preprocessing algorithms 432 to process the inferred data, and use an actuator driver 430 to send data to an actuator 428. In an example, the output device node 426 is implemented on a microcontroller board 424 (e.g., e.g., Intel Galileo microcontroller).

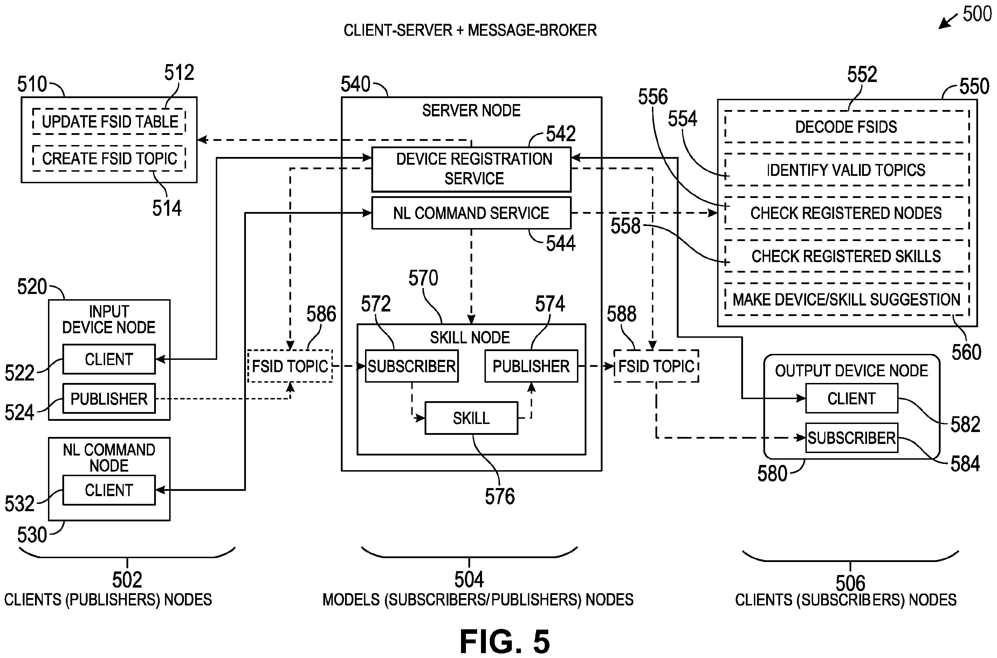

FIG. 5 is a block diagram illustrating communication flows 500 for smart home functionality awareness, according to an embodiment. The communication flows 500 provide communication between client publisher nodes 502 (e.g., publisher nodes), model nodes 504 (e.g., subscriber/publisher nodes) such as server node 540, and client subscriber nodes 506. The communication flows 500 may include client-server communication flows and message-broker communication flows. In the example communication flows 500 shown in FIG. 5, the client-server communication flows are represented by dashed line arrows, and the message-broker communication flows are represented by solid line arrows.

The initial state of the communication flows 500 includes defined elements for initiating a communication session. On the server node 540, these elements are managed by the device registration service (DRS) 542 and the NL command service 544. The client publisher nodes 502 and the client subscriber nodes 506 may include corresponding hardware nodes that may use APIs to communicate with the device registration service 542 and the NL command service 544.

The device registration service 542 may be used to register connected devices and skills. When an input device node 520 (e.g., input client 522) or an output device node 580 (e.g., output client 582) initiates a connection, the device registration service 542 may generate and store registration data 510, which may include updating the FSID table 512 and creating an FSID topic 514 for each registered device.

The input device node 520 may include an input publisher 524, which may publish new or existing functionalities with an FSID topic 586 to the device registration service 542. The input publisher 524 may also publish new or existing functionalities with an FSID topic 586 to a skill node 570. The skill node 570 may receive the FSID topic 586 at a subscriber management module 572, provide the FSID topic 586 to a skill management module 576, and provide an identified skill to a publisher module 574. The publisher module 574 may publish the FSID topic 586 and other data about the skill to a subscriber module 584 within output device node 580.

When a user initiates a request, the request may be received by a NL command node 532. A NL command client 530 may forward the request and associated FSIDs to the NL command service 544 for NL processing capabilities 550. The NL processing capabilities 550 may include decoding FSIDs 552, identifying valid topics 554, checking registered nodes 556, checking registered skills 558, and making a device or skill suggestion 560. Based on the identified devices or skills, the NL command service 544 may generate a command to the skill node 570, which may send instructions to the output device node 580 to execute a command to fulfill the client request. The NL command service 544 may also provide feedback to the NL command node 532 to indicate the status of the execution of the request, including what action is to be taken in response to the user request. The feedback from the NL command service 544 to the NL command node 532 may also include any recommendations for devices or skills identified in the device or skill suggestion 560.

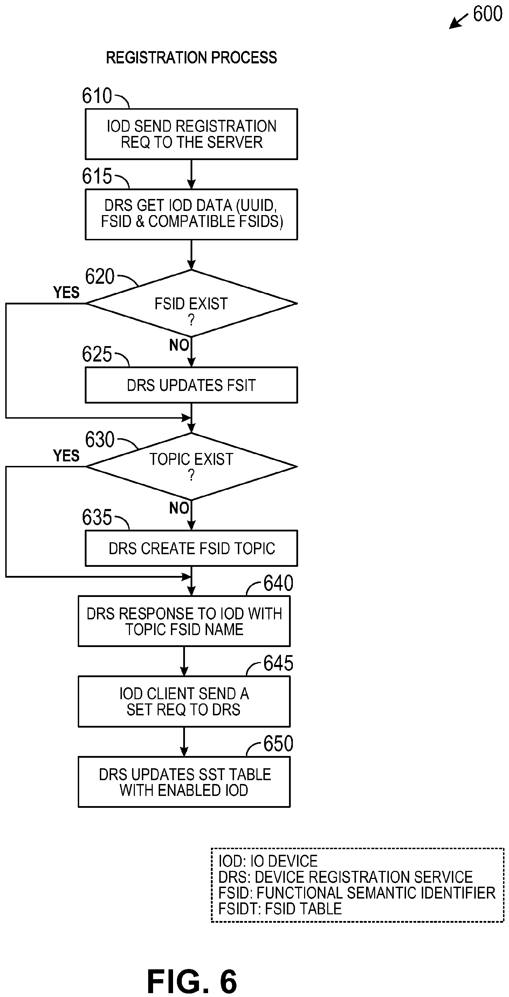

FIG. 6 is a flowchart illustrating a registration process 600 for smart home functionality awareness, according to an embodiment. The registration process 600 may be used by an SHC to register connected I/O nodes. The registration process 600 may begin when an Input/Output (I/O) device (IOD) node sends a registration request 610 to the server. In response to the registration request 610, a device registration service (DRS) (e.g., device registration service 542 shown in FIG. 5) may extract IOD data 615, such as the IOD UUID, the IOD FSID, and any compatible FSIDs.

Following data extraction, the DRS may determine whether the FSID is already registered 620. The FSID is not registered, the DRS updates the FSID Table (FSIDT) 625. The DRS then determines whether a topic exists for this FSID 630. If the topic does not exist, the DRS creates an FSID topic 635.

The DRS may then respond to the IOD with the FSID topic name 640. When the IOD subsequently sends a SST table set request (e.g., SST table update request) to the DRS 645, the DRS may update the SST with an indication of the enabled IOD. Once the DRS updates the FSIDT and SST tables 650 with the IOD descriptor data (e.g., UUID, FSID, compatible FSIDs), the DRS may use this IOD descriptor data to create topic channels for establishing future message-broker communications. In an example, the topic names may be selected to be the same as the FSID of the respective registered device, such that all nodes sharing the same FSID may share a common communication channel.

The IOD may be considered installed and enabled when it is registered at the FSIDT, and when the UUID of the device is subscribed to its FSID topic. The registration process 600 facilitates self-awareness by cataloging connected devices, their capabilities, and communication interfaces via FSIDs and database tables to create an overall system capability view.

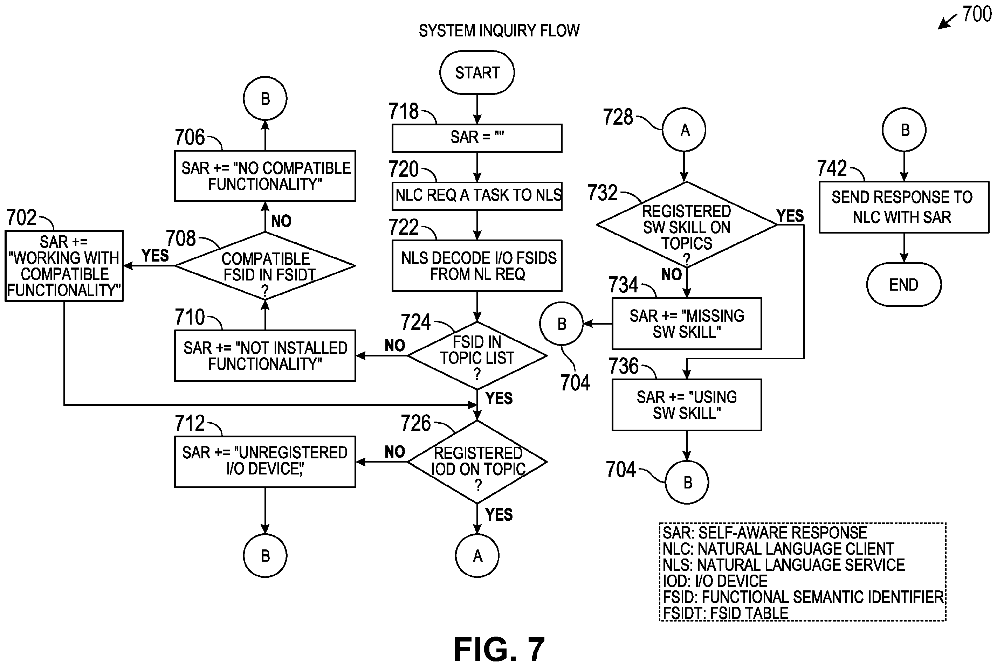

FIG. 7 is a flowchart illustrating a system inquiry flow 700 for smart home functionality awareness, according to an embodiment. The system inquiry flow 700 may be initiated by an NL command (NLC) node. System inquiry flow 700 may start with an empty self-aware response (SAR) 718. An NLC may request a task 720, such as using a natural language service (NLS). The NLS may decode I/O FSIDs 722 from the NL request.

The first of four decisions within the system inquiry flow 700 includes determining whether the FSID is in the topic list 724 (e.g., whether requested functionality is available). If FSID is not in the topic list, the SAR is updated to indicate the functionality is not installed. The system may then determine whether there is a compatible FSID in the FSID table 708. If there is no compatible FSID in the FSID table, then the SAR is further updated to indicate there is no compatible functionality 706, and a response is sent to the NLC with the SAR 742. If there is a compatible FSID in the FSID table, then the SAR is updated to indicate the system will execute the request with compatible functionality 702.

If there is a compatible FSID in the FSID table 708, or if the FSID is in the topic list 724, the system determines whether there is a registered IOD on the topic 726. If there is no registered IOD on the topic, the SAR is updated to indicate there is no registered IOD 712, and a response is sent to the NLC with the SAR 742. If there is a registered IOD on the topic, the system determines whether there is a registered software skill on the topic 732. If there is no registered software skill on the topic, the SAR is updated to indicate the software skill is missing 734, and a response is sent to the NLC with the SAR 742. If there is a registered software skill on the topic, then the SAR is updated to indicate the software skill is present and will be used 736, and a response is sent to the NLC with the SAR 742.

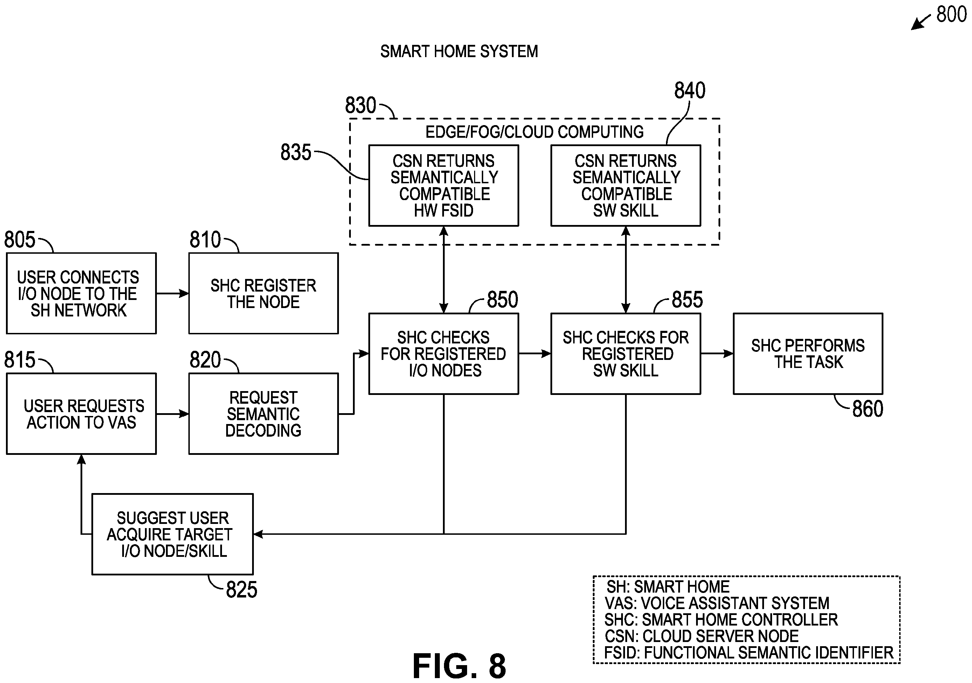

FIG. 8 is a block diagram illustrating a smart home system 800 for smart home functionality awareness, according to an embodiment. Initially, a user may connect an I/O node to a smart home network 805. In response, an SHC may register the I/O node 810. The I/O nodes include input I/O nodes configured to receive a user request and output I/O nodes configured to execute functionality consistent with the user request.

Once I/O nodes are registered, a user may submit an action request to an input I/O node 815, such as requesting an action using a voice assistance service. The request may be semantically decoded 820, such as decoding the request into a semantic triplet that specifies a node device, a node action, and a node action target. If the decoded request specifies a type of I/O node, the SHC may determine whether there are registered I/O nodes 850 that can execute functionality consistent with the user request. If the SHC determines that no such I/O node is registered, the SHC may submit a request to a cloud server node within an edge computing environment 830. The edge computing environment 830 may include one or more of an edge computing device, a cloud computing device, or a combination of edge and cloud computing devices (e.g., fog computing environment). In an example, the use of an edge computing environment 830 may reduce latency, bandwidth requirements, and computation load. In response to the request, the cloud server node may return a semantically compatible hardware FSID 835.

If the decoded request specifies a type of software skill, the SHC may determine whether there are registered software skills 855 that can execute functionality consistent with the user request. If the SHC determines that no such software skill is registered, the SHC may submit a software request to a cloud server node within the edge computing environment 830. In response to the request, the cloud server node may return a semantically compatible software FSID 840.

When the smart home system 800 determines that there is an I/O node or software skill that can execute functionality consistent with the user request, the SCH may initiate execution of the functionality 860. If the SCH identifies an I/O node or software skill not currently registered that could provide improved performance for the user request, the smart home system 800 may submit a suggestion to the user to acquire that target I/O node or software skill 825 that can provide improved performance. If no I/O node or software skill is currently registered or can be retrieved with the aid of the edge computing environment 830, the smart home system 800 may submit a suggestion to the user to acquire a target I/O node or software skill 825 that will execute the requested functionality.

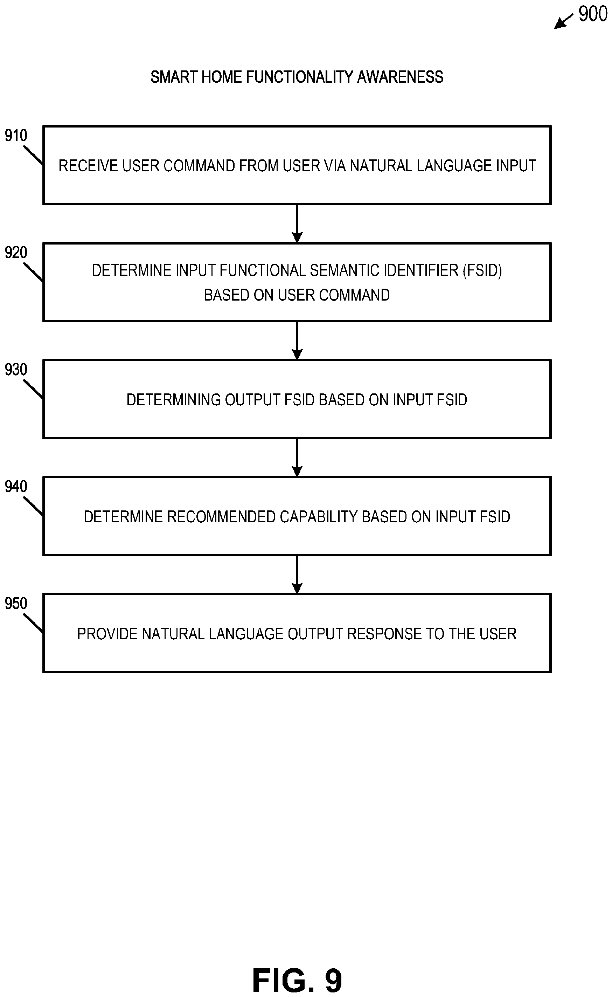

FIG. 9 is a flow diagram illustrating a method 900 for functionality awareness for a smart home system, according to an embodiment. Method 900 includes receiving 910 a user command from a user via a natural language input. Method 900 includes determining 920 an input functional semantic identifier (FSID) based on decoding the user command by a natural language processing device, where the input FSID represents the requested electronic device command.

Method 900 includes determining 930 an output FSID based on the input FSID, where the output FSID represents an existing capability of a smart home system that addresses the requested electronic device command. Method 900 includes determining 940 a recommended capability based on the input FSID, where the recommended capability provides an improved functionality over the existing capability for addressing the requested electronic device command. Method 900 includes providing 950 a natural language output response to the user, the natural language output response confirming an initiation of the existing capability of the smart home system and describing the recommended capability.

Providing the natural language output response describing the recommended capability may include a description of the improved functionality provided by the recommended capability over the existing capability for addressing the requested electronic device command.

Determining 930 the output FSID based on the input FSID may include querying a system status table for the input FSID and identifying the output FSID that corresponds to the input FSID. The system status table may include a plurality of target FSIDs and a plurality of compatible FSIDs, where each of the plurality of target FSIDs is associated with a compatible FSID among the plurality of compatible FSIDs. Each of the plurality of target FSIDs may be associated with an electronic device or a software skill usable by the smart home system.

The system status table may further include a plurality of universal unique identifiers (UUIDs). Each UUID may be associated uniquely with a hardware node within the smart home system. Each of the plurality of UUIDs may be compatible with a target FSID and a compatible FSID.

Method 900 may further include receiving a request to install a new smart home functionality and storing a new FSID in the system status table associated with the new smart home functionality. The new smart home functionality may represent a new smart home hardware device or a new smart home software skill.

Method 900 may further include receiving a node connection request from a new smart home node, extracting a new UUID and new FSID from the node connection request, and updating the system status table to include the new UUID and new FSID associated with the new smart home node.

Decoding the user command by the natural language processing device may include inputting the user command into a transformer-based neural network model trained to generate an input FSID based on a natural language input and receiving the input FSID from the transformer-based neural network model.

Method 900 may further include generating an updated dataset for the transformer-based neural network model. Generating the updated dataset may include receiving a new natural language request. Generating the updated dataset may include generating a domain namespace based on the new natural language request, where the domain namespace is associated with a smart home node functionality. Generating the updated dataset may include generating a semantic triplet based on the domain namespace, where the semantic triplet includes a node device, a node action, and a node action target. Generating the updated dataset may include generating a new input FSID and a new output FSID based on the semantic triplet.

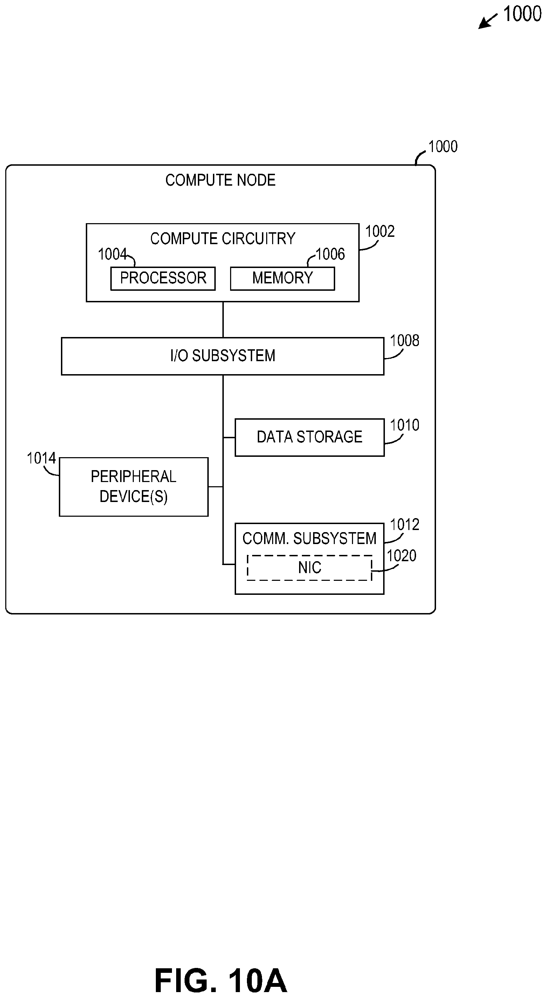

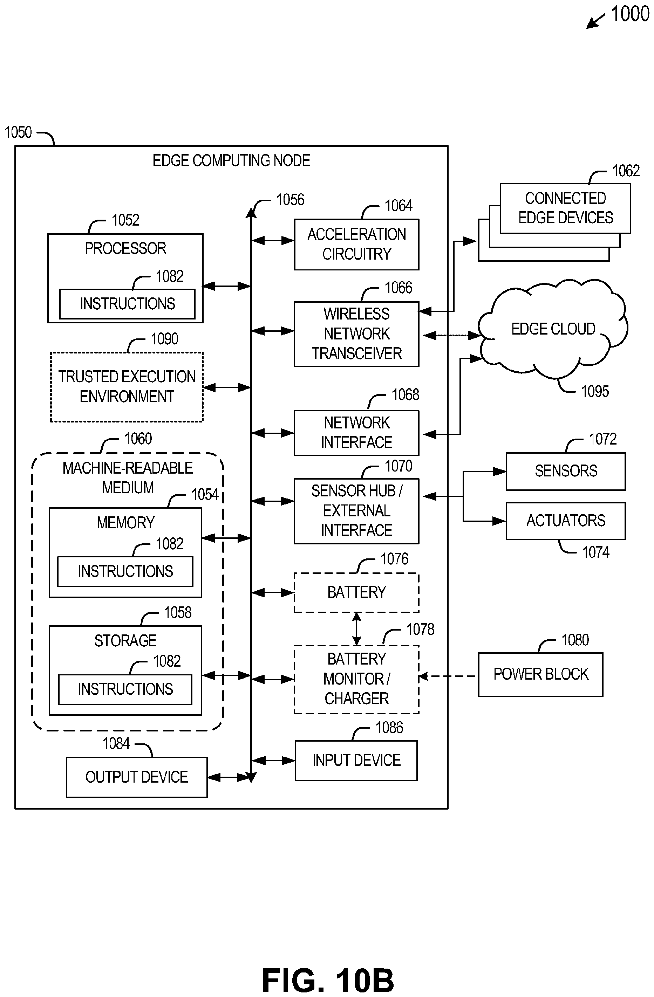

FIGs. 10A and 10B provide an overview of example components within a computing device in an edge computing system 1000, according to embodiments. Edge computing system 1000 may be used to provide secure and attestable functions-as-a-service, such as using method 900 and related systems and methods described above with respect to FIG. 1 through FIG. 9.

In further examples, any of the compute nodes or devices discussed with reference to the present edge computing systems and environment may be fulfilled based on the components depicted in FIGS. 10A and 10B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 10A, an edge compute node 1000 includes a compute circuitry (also referred to herein as "compute engine") 1002, an input/output (I/O) subsystem 1008 (also referred to herein as "I/O circuitry"), data storage 1010 (also referred to herein as "data storage circuitry"), a communication circuitry subsystem 1012, and, optionally, one or more peripheral devices 1014 (also referred to herein as "peripheral device circuitry"). In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 1000 may be embodied as any type of engine, device, or collection of devices capable of performing various compute functions. In some examples, the compute node 1000 may be embodied as a single device such as an integrated circuit, an embedded system, a field-programmable gate array (FPGA), a system-on-a-chip (SOC), or other integrated system or device. In the illustrative example, the compute node 1000 includes or is embodied as a processor 1004 (also referred to herein as "processor circuitry") and a memory 1006 (also referred to herein as "memory circuitry"). The processor 1004 may be embodied as any type of processor capable of performing the functions described herein (e.g., executing an application). For example, the processor 1004 may be embodied as a multi-core processor(s), a microcontroller, a processing unit, a specialized or special purpose processing unit, or other processor or processing/controlling circuit.

In some examples, the processor 1004 may be embodied as, include, or be coupled to an FPGA, an application specific integrated circuit (ASIC), reconfigurable hardware or hardware circuitry, or other specialized hardware to facilitate performance of the functions described herein. In some examples, the processor 1004 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, storage disks, or AI hardware (e.g., GPUs, programmed FPGAs, or ASICs tailored to implement an AI model such as a neural network). Such an xPU may be designed to receive, retrieve, and/or otherwise obtain programming to process one or more data streams and perform specific tasks and actions for the data streams (such as hosting microservices, performing service management or orchestration, organizing or managing server or data center hardware, managing service meshes, or collecting and distributing telemetry), outside of the CPU or general-purpose processing hardware. However, it will be understood that a xPU, a SOC, a CPU, and other variations of the processor 1004 may work in coordination with each other to execute many types of operations and instructions within and on behalf of the compute node 1000.

The memory 1006 may be embodied as any type of volatile (e.g., dynamic random-access memory (DRAM), etc.) or non-volatile memory or data storage capable of performing the functions described herein. Volatile memory may be a storage medium that requires power to maintain the state of data stored by the medium. Non-limiting examples of volatile memory may include various types of random-access memory (RAM), such as DRAM or static random-access memory (SRAM). One particular type of DRAM that may be used in a memory module is synchronous dynamic random-access memory (SDRAM).

In an example, the memory device (e.g., memory circuitry) is any number of block addressable memory devices, such as those based on NAND or NOR technologies (for example, Single-Level Cell ("SLC"), Multi-Level Cell ("MLC"), Quad-Level Cell ("QLC"), Tri-Level Cell ("TLC"), or some other NAND). In some examples, the memory device(s) includes a byte-addressable write-in-place three dimensional crosspoint memory device, or other byte addressable write-in-place non-volatile memory (NVM) devices, such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric transistor random access memory (FeTRAM), magneto resistive random access memory (MRAM) that incorporates memristor technology, spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a combination of any of the above, or other suitable memory. A memory device may also include a three-dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may include a transistor-less stackable cross point architecture in which memory cells sit at the intersection of word lines and bit lines and are individually addressable and in which bit storage is based on a change in bulk resistance. In some examples, all or a portion of the memory 1006 may be integrated into the processor 1004. The memory 1006 may store various software and data used during operation such as one or more applications, data operated on by the application(s), libraries, and drivers.

In some examples, resistor-based and/or transistor-less memory architectures include nanometer scale phase-change memory (PCM) devices in which a volume of phase-change material resides between at least two electrodes. Portions of the example phase-change material exhibit varying degrees of crystalline phases and amorphous phases, in which varying degrees of resistance between the at least two electrodes can be measured. In some examples, the phase-change material is a chalcogenide-based glass material. Such resistive memory devices are sometimes referred to as memristive devices that remember the history of the current that previously flowed through them. Stored data is retrieved from example PCM devices by measuring the electrical resistance, in which the crystalline phases exhibit a relatively lower resistance value(s) (e.g., logical "0") when compared to the amorphous phases having a relatively higher resistance value(s) (e.g., logical "1").

Example PCM devices store data for long periods of time (e.g., approximately 10 years at room temperature). Write operations to example PCM devices (e.g., set to logical "0," set to logical "1," set to an intermediary resistance value) are accomplished by applying one or more current pulses to the at least two electrodes, in which the pulses have a particular current magnitude and duration. For instance, a long low current pulse (SET) applied to the at least two electrodes may cause the example PCM device to reside in a low-resistance crystalline state, while a comparatively short high current pulse (RESET) applied to the at least two electrodes causes the example PCM device to reside in a high-resistance amorphous state.

In some examples, implementation of PCM devices facilitates non-von Neumann computing architectures that enable in-memory computing capabilities. Generally speaking, traditional computing architectures include a central processing unit (CPU) communicatively connected to one or more memory devices via a bus. As such, a finite amount of energy and time is consumed to transfer data between the CPU and memory, which is a known bottleneck of von Neumann computing architectures. However, PCM devices minimize and, in some cases, eliminate data transfers between the CPU and memory by performing some computing operations in-memory. Stated differently, PCM devices both store information and execute computational tasks. Such non-von Neumann computing architectures may implement vectors having a relatively high dimensionality to facilitate hyperdimensional computing, such as vectors having 10,000 bits. Relatively large bit width vectors enable computing paradigms modeled after the human brain, which also processes information analogous to wide bit vectors.

The compute circuitry 1002 is communicatively coupled to other components of the compute node 1000 via the I/O subsystem 1008, which may be embodied as circuitry and/or components to facilitate input/output operations with the compute circuitry 1002 (e.g., with the processor 1004 and/or the main memory 1006) and other components of the compute circuitry 1002. For example, the I/O subsystem 1008 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 1008 may form a portion of a system-on-a-chip (SoC) and be incorporated, along with one or more of the processor 1004, the memory 1006, and other components of the compute circuitry 1002, into the compute circuitry 1002.

The one or more illustrative data storage devices/disks 1010 may be embodied as one or more of any type(s) of physical device(s) configured for short-term or long-term storage of data such as, for example, memory devices, memory, circuitry, memory cards, flash memory, hard disk drives, solid-state drives (SSDs), and/or other data storage devices/disks. Individual data storage devices/disks 1010 may include a system partition that stores data and firmware code for the data storage device/disk 1010. Individual data storage devices/disks 1010 may also include one or more operating system partitions that store data files and executables for operating systems depending on, for example, the type of compute node 1000.

The communication circuitry 1012 may be embodied as any communication circuit, device, or collection thereof, capable of enabling communications over a network between the compute circuitry 1002 and another compute device (e.g., an edge gateway of an implementing edge computing system). The communication circuitry 1012 may be configured to use any one or more communication technology (e.g., wired communications, wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 1012 includes a network interface controller (NIC) 1020, which may also be referred to as a host fabric interface (HFI). The NIC 1020 may be embodied as one or more add-in-boards, daughter cards, network interface cards, controller chips, chipsets, or other devices that may be used by the compute node 1000 to connect with another compute device (e.g., an edge gateway node). In some examples, the NIC 1020 may be embodied as part of a system-on-a-chip (SoC) that includes one or more processors, or included on a multichip package that also contains one or more processors. In some examples, the NIC 1020 may include a local processor (not shown) and/or a local memory (not shown) that are both local to the NIC 1020. In such examples, the local processor of the NIC 1020 may be capable of performing one or more of the functions of the compute circuitry 1002 described herein. Additionally, or alternatively, in such examples, the local memory of the NIC 1020 may be integrated into one or more components of the client compute node at the board level, socket level, chip level, and/or other levels.

Additionally, in some examples, a respective compute node 1000 may include one or more peripheral devices 1014. Such peripheral devices 1014 may include any type of peripheral device found in a compute device or server such as audio input devices, a display, other input/output devices, interface devices, and/or other peripheral devices, depending on the particular type of the compute node 1000. In further examples, the compute node 1000 may be embodied by a respective edge compute node (whether a client, gateway, or aggregation node) in an edge computing system or like forms of appliances, computers, subsystems, circuitry, or other components.

In a more detailed example, FIG. 10B illustrates a block diagram of an example of components that may be present in an edge computing node 1050 for implementing the techniques (e.g., operations, processes, methods, and methodologies) described herein. This edge computing node 1050 provides a closer view of the respective components of node 1000 when implemented as or as part of a computing device (e.g., as a mobile device, a base station, server, gateway, etc.). The edge computing node 1050 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 1050, or as components otherwise incorporated within a chassis of a larger system.

The edge computing device 1050 may include processing circuitry in the form of a processor 1052, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 1052 may be a part of a system on a chip (SoC) in which the processor 1052 and other components are formed into a single integrated circuit, or a single package, such as the Edison^{™} or Galileo^{™} SoC boards from Intel Corporation, Santa Clara, California. As an example, the processor 1052 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 1052 and accompanying circuitry may be provided in a single socket form factor, multiple socket form factor, or a variety of other formats, including in limited hardware configurations or configurations that include fewer than all elements shown in FIG. 10B.

The processor 1052 may communicate with a system memory 1054 over an interconnect 1056 (e.g., a bus). Any number of memory devices may be used to provide for a given amount of system memory. As examples, the memory 1054 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 1058 may also couple to the processor 1052 via the interconnect 1056. In an example, the storage 1058 may be implemented via a solid-state disk drive (SSDD). Other devices that may be used for the storage 1058 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), antiferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, or a combination of any of the above, or other memory.

In low power implementations, the storage 1058 may be on-die memory or registers associated with the processor 1052. However, in some examples, the storage 1058 may be implemented using a micro hard disk drive (HDD). Further, any number of recent technologies may be used for the storage 1058 in addition to, or instead of, the technologies described, such resistance change memories, phase change memories, holographic memories, or chemical memories, among others.

The components may communicate over the interconnect 1056. The interconnect 1056 may include any number of technologies, including industry standard architecture (ISA), extended ISA (EISA), peripheral component interconnect (PCI), peripheral component interconnect extended (PCIx), PCI express (PCIe), or any number of other technologies. The interconnect 1056 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 1056 may couple the processor 1052 to a transceiver 1066, for communications with the connected edge devices 1062. The transceiver 1066 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 1062. For example, a wireless local area network (WLAN) unit may be used to implement Wi-Fi^{®} communications in accordance with the IEEE 802.11 standard. In addition, wireless wide area communications, e.g., according to a cellular or other wireless wide area protocol, may occur via a wireless wide area network (WWAN) unit.

The wireless network transceiver 1066 (or multiple transceivers) may communicate using multiple standards or radios for communications at a different range. For example, the edge computing node 1050 may communicate with close devices, e.g., within about 10 meters, using a local transceiver based on Bluetooth Low Energy (BLE), or another low power radio, to save power. More distant connected edge devices 1062, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 1066 (e.g., a radio transceiver) may be included to communicate with devices or services in a cloud (e.g., an edge cloud 1095) via local or wide area network protocols. The wireless network transceiver 1066 may be a low-power wide-area (LPWA) transceiver that follows the IEEE 802.15.4, or IEEE 802.15.4g standards, among others. The edge computing node 1050 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 1066, as described herein. For example, the transceiver 1066 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 1066 may include radios that are compatible with any number of 3GPP (Third Generation Partnership Project) specifications, such as Long Term Evolution (LTE) and 5th Generation (5G) communication systems. A network interface controller (NIC) 1068 may be included to provide a wired communication to nodes of the edge cloud 1095 or to other devices, such as the connected edge devices 1062 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 1068 may be included to enable connecting to a second network, for example, a first NIC 1068 providing communications to the cloud over Ethernet, and a second NIC 1068 providing communications to other devices over another type of network.

Given the variety of types of applicable communications from the device to another component or network, applicable communications circuitry used by the device may include or be embodied by any one or more of components 1064, 1066, 1068, or 1070. Accordingly, in various examples, applicable means for communicating (e.g., receiving, transmitting, etc.) may be embodied by such communications circuitry.

The edge computing node 1050 may include or be coupled to acceleration circuitry 1064, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 1056 may couple the processor 1052 to a sensor hub or external interface 1070 that is used to connect additional devices or subsystems. The devices may include sensors 1072, such as accelerometers, level sensors, flow sensors, optical light sensors, camera sensors, temperature sensors, global navigation system (e.g., GPS) sensors, pressure sensors, barometric pressure sensors, and the like. The hub or interface 1070 further may be used to connect the edge computing node 1050 to actuators 1074, such as power switches, valve actuators, an audible sound generator, a visual warning device, and the like.

In some optional examples, various input/output (I/O) devices may be present within or connected to, the edge computing node 1050. For example, a display or other output device 1084 may be included to show information, such as sensor readings or actuator position. An input device 1086, such as a touch screen or keypad may be included to accept input. An output device 1084 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 1050. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 1076 may power the edge computing node 1050, although, in examples in which the edge computing node 1050 is mounted in a fixed location, it may have a power supply coupled to an electrical grid, or the battery may be used as a backup or for temporary capabilities. The battery 1076 may be a lithium-ion battery, or a metal-air battery, such as a zinc-air battery, an aluminum-air battery, a lithium-air battery, and the like.

A battery monitor/charger 1078 may be included in the edge computing node 1050 to track the state of charge (SoCh) of the battery 1076, if included. The battery monitor/charger 1078 may be used to monitor other parameters of the battery 1076 to provide failure predictions, such as the state of health (SoH) and the state of function (SoF) of the battery 1076. The battery monitor/charger 1078 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 1078 may communicate the information on the battery 1076 to the processor 1052 over the interconnect 1056. The battery monitor/charger 1078 may also include an analog-to-digital (ADC) converter that enables the processor 1052 to directly monitor the voltage of the battery 1076 or the current flow from the battery 1076. The battery parameters may be used to determine actions that the edge computing node 1050 may perform, such as transmission frequency, mesh network operation, sensing frequency, and the like.

A power block 1080, or other power supply coupled to a grid, may be coupled with the battery monitor/charger 1078 to charge the battery 1076. In some examples, the power block 1080 may be replaced with a wireless power receiver to obtain the power wirelessly, for example, through a loop antenna in the edge computing node 1050. A wireless battery charging circuit, such as an LTC4020 chip from Linear Technologies of Milpitas, California, among others, may be included in the battery monitor/charger 1078. The specific charging circuits may be selected based on the size of the battery 1076, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 1058 may include instructions 1082 in the form of software, firmware, or hardware commands to implement the techniques described herein. Although such instructions 1082 are shown as code blocks included in the memory 1054 and the storage 1058, it may be understood that any of the code blocks may be replaced with hardwired circuits, for example, built into an application specific integrated circuit (ASIC).

In an example, the instructions 1082 provided via the memory 1054, the storage 1058, or the processor 1052 may be embodied as a non-transitory, machine-readable medium 1060 including code to direct the processor 1052 to perform electronic operations in the edge computing node 1050. The processor 1052 may access the non-transitory, machine-readable medium 1060 over the interconnect 1056. For instance, the non-transitory, machine-readable medium 1060 may be embodied by devices described for the storage 1058 or may include specific storage units such as storage devices and/or storage disks that include optical disks (e.g., digital versatile disk (DVD), compact disk (CD), CD-ROM, Blu-ray disk), flash drives, floppy disks, hard drives (e.g., SSDs), or any number of other hardware devices in which information is stored for any duration (e.g., for extended time periods, permanently, for brief instances, for temporarily buffering, and/or caching). The non-transitory, machine-readable medium 1060 may include instructions to direct the processor 1052 to perform a specific sequence or flow of actions, for example, as described with respect to the flowchart(s) and block diagram(s) of operations and functionality depicted above. As used herein, the terms "machine-readable medium" and "computer-readable medium" are interchangeable. As used herein, the term "non-transitory computer-readable medium" is expressly defined to include any type of computer readable storage device and/or storage disk and to exclude propagating signals and to exclude transmission media.

Also in a specific example, the instructions 1082 on the processor 1052 (separately, or in combination with the instructions 1082 of the machine readable medium 1060) may configure execution or operation of a trusted execution environment (TEE) 1090. In an example, the TEE 1090 operates as a protected area accessible to the processor 1052 for secure execution of instructions and secure access to data. Various implementations of the TEE 1090, and an accompanying secure area in the processor 1052 or the memory 1054 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 1050 through the TEE 1090 and the processor 1052.

Examples, as described herein, may include, or may operate on, logic or a number of components, modules, or mechanisms. Modules may be hardware, software, or firmware communicatively coupled to one or more processors in order to carry out the operations described herein. Modules may be hardware modules, and as such modules may be considered tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software; the general-purpose hardware processor may be configured as respective different modules at different times. Software may accordingly configure a hardware processor, for example, to constitute a particular module at one instance of time and to constitute a different module at a different instance of time. Modules may also be software or firmware modules, which operate to perform the methodologies described herein.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or modules may, collectively or individually, be embodied as circuitry that forms part of a larger system, for example, an integrated circuit (IC), system on-chip (SoC), desktop computers, laptop computers, tablet computers, servers, smart phones, etc.

As used in any embodiment herein, the term "logic" may refer to firmware and/or circuitry configured to perform any of the aforementioned operations. Firmware may be embodied as code, instructions or instruction sets and/or data that are hard-coded (e.g., nonvolatile) in memory devices and/or circuitry.

"Circuitry," as used in any embodiment herein, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry executing code and/or instructions sets (e.g., software, firmware, etc.) corresponding to the functionality described herein, thus transforming a general-purpose processor into a specific-purpose processing environment to perform one or more of the operations described herein. In some embodiments, the processor circuitry may be embodied as a stand-alone integrated circuit or may be incorporated as one of several components on an integrated circuit. In some embodiments, the various components and circuitry of the node or other systems may be combined in a system-on-a-chip (SoC) architecture

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

Each of the following non-limiting examples may stand on its own, or may be combined in various permutations or combinations with one or more of the other examples.

Example 1 is a smart home system for smart home functionality awareness, the smart home system comprising: a natural language processing device configured to: receive a user command from a user from a natural language input device; and decode the user command to determine an input functional semantic identifier (FSID) representing a requested electronic device command; and a smart home command processing device configured to: determine an output FSID representing an existing capability of a smart home system that addresses the requested electronic device command; and determine a recommended capability based on the input FSID, the recommended capability providing improved functionality over the existing capability for addressing the requested electronic device command; and cause an output device to provide a natural language output response to the user confirming an initiation of the existing capability and describing the recommended capability.

In Example 2, the subject matter of Example 1 includes a smart home controller configured to: send an execution instruction to a smart home device; receive an execution response from the smart home device; and provide an execution output to the user, the execution output based on the execution response.

In Example 3, the subject matter of Example 2 includes wherein the smart home device includes at least one of an image capture device, an electronically activated speaker, an electronically activated microphone, an electronically activated light source, or an electronically activated power source.

In Example 4, the subject matter of Examples 1-3 includes wherein the natural language input device and the output device include at least one of an audio transducer or a text input device.

In Example 5, the subject matter of Examples 1-4 includes an edge computing node, the edge computing node including the natural language processing device and the smart home command processing device.

In Example 6, the subject matter of Examples 1-5 includes wherein the natural language output response includes a description of the improved functionality provided by the recommended capability over the existing capability for addressing the requested electronic device command.

In Example 7, the subject matter of Examples 1-6 includes wherein determining the output FSID based on the input FSID includes querying a system status table for the input FSID and identifying the output FSID that corresponds to the input FSID.

In Example 8, the subject matter of Example 7 includes wherein: the system status table includes a plurality of target FSIDs and a plurality of compatible FSIDs; and at least one of the plurality of target FSIDs is associated with a compatible FSID among the plurality of compatible FSIDs.

In Example 9, the subject matter of Example 8 includes wherein each of the plurality of target FSIDs is associated with an electronic device or a software skill usable by the smart home system.

In Example 10, the subject matter of Examples 8-9 includes wherein: the system status table further includes a plurality of universal unique identifiers (UUIDs); each of the plurality of UUIDs is uniquely associated with a hardware node within the smart home system; and each of the plurality of UUIDs is compatible with a target FSID and a compatible FSID.

In Example 11, the subject matter of Examples 7-10 includes wherein the smart home command processing device is further configured to: receive a request to install a new smart home functionality, the new smart home functionality representing a new smart home hardware device or a new smart home software skill; and store a new FSID in the system status table associated with the new smart home functionality.

In Example 12, the subject matter of Examples 7-11 includes wherein the smart home command processing device updates the system status table by: receiving a node connection request from a new smart home node; extracting a new UUID and new FSID from the node connection request; and updating the system status table to include the new UUID and new FSID associated with the new smart home node.

In Example 13, the subject matter of Examples 1-12 includes wherein the natural language processing device includes: a transformer-based neural network model trained to generate an input FSID based on a natural language input; wherein decoding the user command includes: inputting the user command into the transformer-based neural network model; and receiving the input FSID from the transformer-based neural network model.

In Example 14, the subject matter of Example 13 includes a model update unit configured to generate an updated dataset for the transformer-based neural network model by: receiving a natural language request; generating a domain namespace based on the natural language request, the domain namespace associated with a smart home node functionality; generating a semantic triplet based on the domain namespace, the semantic triplet including a node device, a node action, and a node action target; and generating a unique input FSID and a unique output FSID based on the semantic triplet.

Example 15 is a method for functionality awareness for a smart home system, the method comprising: receiving a user command from a user via a natural language input; determining an input functional semantic identifier (FSID) based on decoding the user command by a natural language processing device, the input FSID representing a requested electronic device command; determining an output FSID based on the input FSID, the output FSID representing an existing capability of a smart home system that addresses the requested electronic device command; determining a recommended capability based on the input FSID, the recommended capability providing an improved functionality over the existing capability for addressing the requested electronic device command; and providing a natural language output response to the user, the natural language output response confirming an initiation of the existing capability of the smart home system and describing the recommended capability.

In Example 16, the subject matter of Example 15 includes wherein providing the natural language output response describing the recommended capability includes a description of the improved functionality provided by the recommended capability over the existing capability for addressing the requested electronic device command.

In Example 17, the subject matter of Examples 15-16 includes wherein determining the output FSID based on the input FSID includes querying a system status table for the input FSID and identifying the output FSID that corresponds to the input FSID.

In Example 18, the subject matter of Example 17 includes wherein: the system status table includes a plurality of target FSIDs and a plurality of compatible FSIDs; and each of the plurality of target FSIDs is associated with a compatible FSID among the plurality of compatible FSIDs.

In Example 19, the subject matter of Example 18 includes wherein each of the plurality of target FSIDs is associated with an electronic device or a software skill usable by the smart home system.

In Example 20, the subject matter of Examples 18-19 includes wherein: the system status table further includes a plurality of universal unique identifiers (UUIDs); each UUID is associated uniquely with a hardware node within the smart home system; and each of the plurality of UUIDs compatible with a target FSID and a compatible FSID.

In Example 21, the subject matter of Examples 17-20 includes receiving a request to install a new smart home functionality, the new smart home functionality representing a new smart home hardware device or a new smart home software skill; and storing a new FSID in the system status table associated with the new smart home functionality.

In Example 22, the subject matter of Examples 17-21 includes updating the system status table including: receiving a node connection request from a new smart home node; extracting a new UUID and new FSID from the node connection request; and updating the system status table to include the new UUID and new FSID associated with the new smart home node.

In Example 23, the subject matter of Examples 15-22 includes wherein decoding the user command by a natural language processing device includes: inputting the user command into a transformer-based neural network model trained to generate an input FSID based on a natural language input; and receiving the input FSID from the transformer-based neural network model.

In Example 24, the subject matter of Example 23 includes generating an updated dataset for the transformer-based neural network model, generating an updated dataset including: receiving a natural language request; generating a domain namespace based on the natural language request, the domain namespace associated with a smart home node functionality; generating a semantic triplet based on the domain namespace, the semantic triplet including a node device, a node action, and a node action target; and generating a unique input FSID and a unique output FSID based on the semantic triplet.

Example 25 is a machine-readable storage medium comprising instructions that, when executed by a processor of a smart home computing device, cause the smart home computing device to: receive a user command from a user via a natural language input; determine an input functional semantic identifier (FSID) based on decoding the user command by a natural language processing device, the input FSID representing a requested electronic device command; determine an output FSID based on the input FSID, the output FSID representing an existing capability of a smart home system that addresses the requested electronic device command; determine a recommended capability based on the input FSID, the recommended capability providing an improved functionality over the existing capability for addressing the requested electronic device command; and provide a natural language output response to the user, the natural language output response confirming an initiation of the existing capability of the smart home system and describing the recommended capability.

In Example 26, the subject matter of Example 25 includes wherein providing the natural language output response describing the recommended capability includes a description of the improved functionality provided by the recommended capability over the existing capability for addressing the requested electronic device command.

In Example 27, the subject matter of Examples 25-26 includes wherein determining the output FSID based on the input FSID includes querying a system status table for the input FSID and identifying the output FSID that corresponds to the input FSID.

In Example 28, the subject matter of Example 27 includes wherein: the system status table includes a plurality of target FSIDs and a plurality of compatible FSIDs; and each of the plurality of target FSIDs is associated with a compatible FSID among the plurality of compatible FSIDs.

In Example 29, the subject matter of Example 28 includes wherein each of the plurality of target FSIDs is associated with an electronic device or a software skill usable by the smart home system.

In Example 30, the subject matter of Examples 28-29 includes wherein: the system status table further includes a plurality of universal unique identifiers (UUIDs); each UUID is associated uniquely with a hardware node within the smart home system; and each of the plurality of UUIDs compatible with a target FSID and a compatible FSID.

In Example 31, the subject matter of Examples 27-30 includes the instructions further causing the smart home computing device to: receive a request to install a new smart home functionality, the new smart home functionality representing a new smart home hardware device or a new smart home software skill; and store a new FSID in the system status table associated with the new smart home functionality.

In Example 32, the subject matter of Examples 27-31 includes the instructions further causing the smart home computing device to update the system status table, wherein updating the system status table includes: receiving a node connection request from a new smart home node; extracting a new UUID and new FSID from the node connection request; and updating the system status table to include the new UUID and new FSID associated with the new smart home node.

In Example 33, the subject matter of Examples 25-32 includes wherein decoding the user command by a natural language processing device includes: inputting the user command into a transformer-based neural network model trained to generate an input FSID based on a natural language input; and receiving the input FSID from the transformer-based neural network model.

In Example 34, the subject matter of Example 33 includes the instructions further causing the smart home computing device to generate an updated dataset for the transformer-based neural network model, wherein generating the updated dataset includes: receiving a natural language request; generating a domain namespace based on the natural language request, the domain namespace associated with a smart home node functionality; generating a semantic triplet based on the domain namespace, the semantic triplet including a node device, a node action, and a node action target; and generating a unique input FSID and a unique output FSID based on the semantic triplet.

Example 35 is at least one machine-readable medium including instructions that, when executed by processing circuitry, cause the processing circuitry to perform operations to implement of any of Examples 1-34.

Example 36 is an apparatus comprising means to implement of any of Examples 1-34.

Example 37 is a system to implement of any of Examples 1-34.

Example 38 is a method to implement of any of Examples 1-34.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims, along with the full scope of equivalents to which such claims are entitled.

## Claims

1. A method for functionality awareness for a smart home system, the method comprising:
receiving a user command from a user via a natural language input;
determining an input functional semantic identifier (FSID) based on decoding the user command by a natural language processing device, the input FSID representing a requested electronic device command;
determining an output FSID based on the input FSID, the output FSID representing an existing capability of a smart home system that addresses the requested electronic device command;
determining a recommended capability based on the input FSID, the recommended capability providing an improved functionality over the existing capability for addressing the requested electronic device command; and
providing a natural language output response to the user, the natural language output response confirming an initiation of the existing capability of the smart home system and describing the recommended capability.

2. The method of claim 1, wherein providing the natural language output response describing the recommended capability includes a description of the improved functionality provided by the recommended capability over the existing capability for addressing the requested electronic device command.

3. The method of any of claims 1-2, wherein determining the output FSID based on the input FSID includes querying a system status table for the input FSID and identifying the output FSID that corresponds to the input FSID.

4. The method of claim 3, wherein:
the system status table includes a plurality of target FSIDs and a plurality of compatible FSIDs; and
each of the plurality of target FSIDs is associated with a compatible FSID among the plurality of compatible FSIDs.

5. The method of claim 4, wherein each of the plurality of target FSIDs is associated with an electronic device or a software skill usable by the smart home system.

6. The method of any of claims 4-5, wherein:
the system status table further includes a plurality of universal unique identifiers (UUIDs);
each UUID is associated uniquely with a hardware node within the smart home system; and
each of the plurality of UUIDs compatible with a target FSID and a compatible FSID.

7. The method of any of claims 3-6, further comprising:
receiving a request to install a new smart home functionality, the new smart home functionality representing a new smart home hardware device or a new smart home software skill; and
storing a new FSID in the system status table associated with the new smart home functionality.

8. The method of any of claims 3-7, further including updating the system status table including:
receiving a node connection request from a new smart home node;
extracting a new UUID and new FSID from the node connection request; and
updating the system status table to include the new UUID and new FSID associated with the new smart home node.

9. The method of any of claims 1-8, wherein decoding the user command by a natural language processing device includes:
inputting the user command into a transformer-based neural network model trained to generate an input FSID based on a natural language input; and
receiving the input FSID from the transformer-based neural network model.

10. The method of claim 9, further including generating an updated dataset for the transformer-based neural network model, generating an updated dataset including:
receiving a natural language request;
generating a domain namespace based on the natural language request, the domain namespace associated with a smart home node functionality;
generating a semantic triplet based on the domain namespace, the semantic triplet including a node device, a node action, and a node action target; and
generating a unique input FSID and a unique output FSID based on the semantic triplet.

11. An apparatus comprising means to perform the method of any of claims 1-10.

12. Machine-readable storage including machine-readable instructions, when executed, cause a computing device to implement the method of any of claims 1-10.

13. A computer program comprising instructions which, when the computer program is executed by a computer, cause the computer to carry out the method of any of claims 1-10.
